# EUROPÄISCHE PATENTSCHRIFT

(11) **EP 2 360 004 B1**
(45) Veröffentlichungstag und Bekanntmachung des Hinweises auf die Patenterteilung: **30.10.2013**
(21) Anmeldenummer: 11153661.1
(22) Anmeldetag: 08.02.2011
(51) Int. Cl.: B29C 47/90

(54) **Kalibrierblende und Kalibriereinsatz für ein Kalibrierwerkzeug**
Calibration plate and calibration insert for a calibration tool
Plaque et insert de calibrage pour un outil de calibrage

(30) Priorität: 11.02.2010 AT 1962010
(43) Veröffentlichungstag der Anmeldung: 24.08.2011
(73) Patentinhaber: Politsch Kunststofftechnik GmbH, 4551 Ried Im Traunkreis (AT)
(72) Erfinder: Gugenberger, Walter, 4600 WELS (AT)
(74) Vertreter: Babeluk, Michael

(56) Entgegenhaltungen:
- AT-A1- 504 441
- DE-C1- 19 806 202
- DE-U1- 20 111 198
- DE-U1-202008 011 122
- US-A- 3 247 547

## Beschreibung

Die Erfindung betrifft eine Kalibrierblende für ein Kalibrierwerkzeug zur Herstellung von Kunststoffprofilen, mit mindestens einem Kalibriereinsatz, der einen Halteabschnitt und einen Formgebungsabschnitt aufweist, wobei der Halteabschnitt in einer Nut der Kalibrierblende aufgenommen ist und formschlüssig gehalten ist.

Bei der Extrusion von Kunststoffprofilen werden üblicherweise Nasskalibrierwerkzeuge eingesetzt, das sind mit Wasser gefüllte Wannen, die eine Mehrzahl von Kalibrierblenden aufweisen, durch die das Profil hindurchtritt. Besonders kritisch bei der Kalibrierung sind konkave Abschnitte des Profils, wie etwa Dichtungsnuten. Um diese Abschnitte besonders präzise kalibrieren zu können und um ausreichend lange Standzeiten der Werkzeuge gewährleisten zu können, ist es dabei üblich, in die Kalibrierblenden Kalibriereinsätze einzusetzen, die typischerweise aus Hartmetall hergestellt sind. Diese Kalibriereinsätze springen in die Öffnung der Kalibrierblenden vor und bilden die Nuten des Profils aus. Zur Befestigung der Kalibriereinsätze ist es bekannt, diese kraftschlüssig, beispielsweise durch Keilverbindungen in den Kalibrierblenden festzulegen. Es ist auch bekannt, feste Verbindungen beispielsweise durch Löten herzustellen. Da diese bekannten Lösungen verschiedene Nachteile aufweisen, ist man dazu übergegangen, formschlüssige Verbindungen zwischen den Kalibriereinsätzen und der Kalibrierblende vorzusehen. Solche formschlüssigen Verbindungen gemäß dem Oberbegriff des Anspruchs 1 oder Anspruchs 4, sind beispielsweise in der AT 411 162 B (GREINER) oder in der AT 504 441 A (TECHNOPLAST) gezeigt. Diese formschlüssigen Verbindungen sind von ihren Anwendungseigenschaften her sehr günstig zu beurteilen und haben sich daher gegenüber den oben beschriebenen Lösungen weitgehend durchgesetzt. Nachteilig bei den bekannten formschlüssigen Kalibriereinsätzen ist jedoch die Tatsache, dass der Herstellungsaufwand aufgrund der komplexen Formgebung erhöht ist. Die Kalibriereinsätze können durch kostengünstige Drahterosionsverfahren nicht oder nur mit hohem Aufwand herstellt werden. Sinterverfahren liefern bisweilen nur unbefriedigende Ergebnisse.

Aufgabe der vorliegenden Erfindung ist es, Kalibrierblenden samt Kalibriereinsätzen der oben beschriebenen Art so weiterzubilden, dass die Vorteile von formschlüssig befestigten Kalibriereinsätzen mit geringem Aufwand erreicht werden können.

Erfindungsgemäß ist vorgesehen, dass der Halteabschnitt des Kalibriereinsatzes aus zwei koaxial angeordneten konischen Bereichen besteht, die im mittleren Bereich ihre größte Querschnittserstreckung aufweisen, gemäß dem kennzeichnenden Teil der Ansprüche 1 und 4. Der Halteabschnitt, das ist der Teil des Kalibriereinsatzes, der dazu vorgesehen ist, in der entsprechenden Ausnehmung der Kalibrierblende aufgenommen zu werden, besitzt also zwei konische Abschnitte von denen einer den Sitz und die Verankerung des Kalibriereinsatzes in der Kalibrierblende bildet. Der Halteabschnitt kann damit im Wesentlichen konvex ausgebildet werden, d.h., dass er keine einspringenden Ecken neben Vorsprüngen oder dergleichen aufweist. Dadurch kann der Kalibriereinsatz problemlos durch Drahterosion hergestellt werden. Es ist aber gleichermaßen möglich, Gieß- oder Sinterverfahren einzusetzen, wenn dies produktionstechnisch wünschenswert ist.

Vorzugsweise ist vorgesehen, dass die Nut der Kalibrierblende aus einem stromaufwärtigen Abschnitt und einem stromabwärtigen Abschnitt besteht, der konisch entsprechend einem konischen Bereich des Kalibriereinsatzes ausgebildet ist, um diesen formschlüssig aufzunehmen. Der stromabwärtige Abschnitt der Kalibrierblende bildet den Sitz für einen der konischen Bereiche des Kalibriereinsatzes. Der andere, stromaufwärtige Abschnitt der Kalibrierblende ist so ausgebildet, dass der Kalibriereinsatz von dieser Seite eingeführt und auf diese Seite auch wieder entnommen werden kann. Vorzugsweise ist dieser Bereich zylindrisch.

Weiters betrifft die vorliegende Erfindung auch einen Kalibriereinsatz für eine Kalibrierblende mit den oben beschriebenen Merkmalen. Insbesondere ist besonders günstig, wenn der Kalibriereinsatz um eine zur Längsachse rechtwinkelige angeordnete Ebene symmetrisch ausgebildet ist. Dadurch kann man den Kalibriereinsatz doppelseitig verwenden, wodurch die Möglichkeit besteht, nach einer gewissen Laufzeit, die an der stromaufwärtigen Seite des Kalibriereinsatzes einen bestimmten Verschleiß verursacht, zu wenden und so insgesamt die doppelte Standzeit im Einsatz zu belassen.

Besonders günstig ist es, wenn die konischen Bereiche zumindest abschnittsweise kegelstumpfförmig ausgebildet sind. Da ein Kegelstumpf aus geraden Erzeugenden besteht, kann diese Form sehr einfach durch Drahterosion hergestellt werden. Es ist aber auch möglich, an bestimmten Stellen Abflachungen oder Nuten herzustellen, die sich in Längsrichtung erstrecken und somit ebenfalls produktionstechnisch leicht realisierbar sind.

Ein besonders sicherer und zuverlässiger Sitz des Kalibriereinsatzes in der Kalibrierblende kann dadurch erreicht werden, dass zwischen dem Halteabschnitt und dem Formgebungsabschnitt ein Stabilisierungsabschnitt vorgesehen ist, der Anlageflächen zur seitlichen Stabilisierung des Kalibriereinsatzes aufweist. Da auch durch diese Maßnahme keine Hinterschneidungen in Längsrichtung geschaffen werden, ist die Herstellung dieser Variante nicht verkompliziert.

Besonders vorzugsweise weisen die konischen Abschnitte aus Erzeugenden zusammengesetzt sind, die einen Winkel zwischen 1,5° und 8°, vorzugsweise zwischen 2° und 5° gegenüber der Längsachse auf. Die vorliegende Erfindung ist insgesamt jedoch in einem Bereich des Winkels zwischen 0,5° und 15° anwendbar. Besonders die kleinen Winkel geben den Vorteil, dass eine Selbsthemmung des Kalibriereinsatzes erreicht wird, so dass keine Sicherung gegen Herausfallen erforderlich ist. Es ist allerdings die Anforderung an entsprechend geringe Produktionstoleranzen gegeben. Um ein Vorstehen des Kalibriereinsatzes aufgrund solcher Produktionstoleranzen zu verhindern ist es von besonderem Vorteil, den Kalibriereinsatz etwas kürzer auszubilden als die Dicke der Kalibrierblende, beispielsweise um 2 mm bei einem Winkel von 1°.

Dies bedeutet, dass der Öffnungswinkel der bevorzugt kegelförmigen Abschnitte doppelt so groß ist, wie die oben angeführten Werte.

Es ist letztlich günstig, wenn der Formgebungsabschnitt seitlich gegenüber dem Halteabschnitt versetzt angeordnet ist.

Bei der Feinabstimmung von Extrusionswerkzeugen ist es bisweilen erforderlich Kalibriereinsätze geringfügig seitlich zu versetzen, um den Qualitätsanforderungen an ein Profil optimal entsprechen zu können. Dies wird im Sinne der bevorzugten Ausführungsvariante der vorliegenden Erfindung dadurch erreicht, dass ein Bausatz von Kalibriereinsätzen zur Verfügung gestellt wird, bei denen der Formgebungsabschnitt seitlich gegenüber dem Halteabschnitt versetzt angeordnet ist. Der Versatz kann dabei beispielsweise in Zehntel Millimeterschritten abgestuft erfolgen. Besonders vorteilhaft bei der vorliegenden Erfindung ist es aufgrund der oben dargestellten bevorzugt symmetrischen Ausbildung der Kalibriereinsätze, dass es somit nicht erforderlich ist nach links und nach rechts versetzte Kalibriereinsätze zur Verfügung zu stellen, da ein Versatz in unterschiedliche Richtungen durch einfaches Umdrehen der Kalibriereinsätze bewerkstelligt werden kann. Der notwendige Vorrat an unterschiedlichen Kalibriereinsätzen kann dadurch praktisch auf die Hälfte reduziert werden, was die Teilevielfalt reduziert.

Um ein Abschaben des zu kalibrierenden Profils zu verhindern, werden beide Einlaufflächen der Laufpunkte mit einer Einlaufschräge versehen.

In der Folge wird die vorliegende Erfindung an den in Figuren dargestellten Ausführungsvarianten näher erläutert. Es zeigen:
- Fig. 1: eine teilweise seitliche Ansicht eines erfindungsgemäßen Kalibriereinsatzes;
- Fig. 2: und Fig. 2a jeweils eine Ansicht von vorne;
- Fig. 3: eine Kalibrierblende in axonometrischer Darstellung; und
- Fig. 4: ein Detail der Kalibrierblende von Fig. 3.

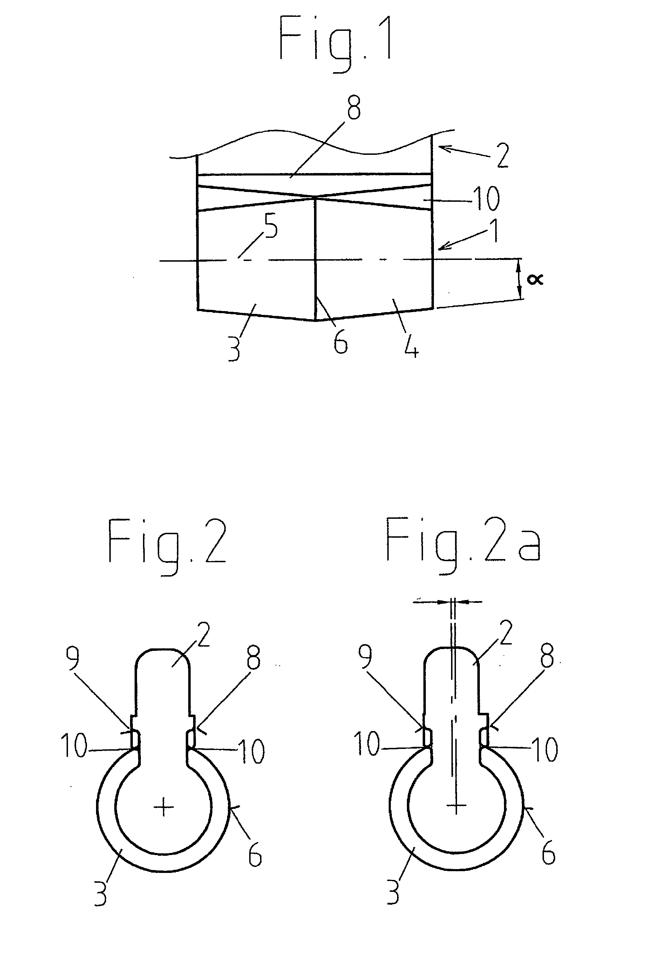

Der Kalibriereinsatz von Fig. 1 besteht aus einem Halteabschnitt 1 und einem nur angedeuteten Formgebungsabschnitt 2. Der Halteabschnitt 1 besteht im Wesentlichen aus zwei koaxial angeordneten konischen Bereichen 3, 4, die im Wesentlichen kegelstumpfförmig angeordnet sind. Der übertrieben dargestellte Winkel α der Erzeugenden zur Längsachse 5 beträgt etwa 2° und kann in einem Bereich zwischen 0,5° und 15°, vorzugsweise zwischen 1,5° und 8° liegen. Die beiden konischen Bereiche 3, 4 sind durch eine Umrisslinie 6 voneinander getrennt, die etwa im mittleren Bereich des Kalibriereinsatzes liegt und die die größte Querschnittserstreckung im Formgebungsabschnitt definiert. An den Halteabschnitt 1 anschließend ist ein Stabilisierungsabschnitt 7 vorgesehen, der zwei Anlageflächen 8, 9 aufweist, die zur seitlichen Stabilisierung des Kalibriereinsatzes dienen. Wie aus Fig. 1 ersichtlich, sind die Stabilisierungsabschnitte 8, 9 zum Halteabschnitt 1 hin dreiecksförmig ausgebildet, wobei zwischen den konischen Bereichen 3, 4 und den Anlageflächen 8, 9 Freistellungen 10 ausgebildet sind. Diese Freistellungen 10 dienen dazu, Drahterosionswerkzeuge, die zur Herstellung der konischen Bereiche 3, 4 vorgesehen sind, aufzunehmen, ohne die Struktur des Kalibriereinsatze zu berühren.

Fig. 2a zeigt eine alternative Ausführungsvariante, bei der der Formgebungsabschnitt 2 gegenüber dem Halteabschnitt 1 seitlich um einen geringen Versatz b verschoben ist. In einem Set von Kalibriereinsätze ist der Versatz b beispielsweise in Schritten von 0,1 mm von Null beginnend abgestuft.

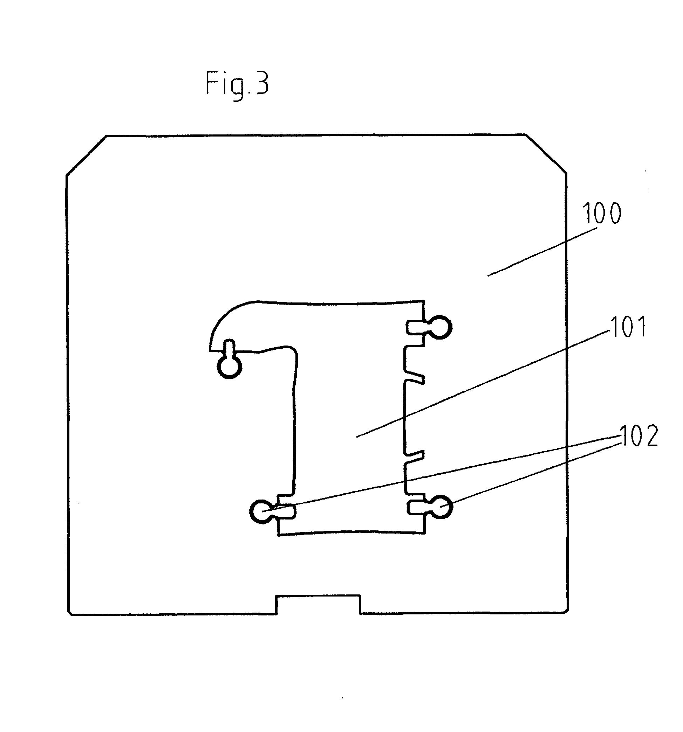

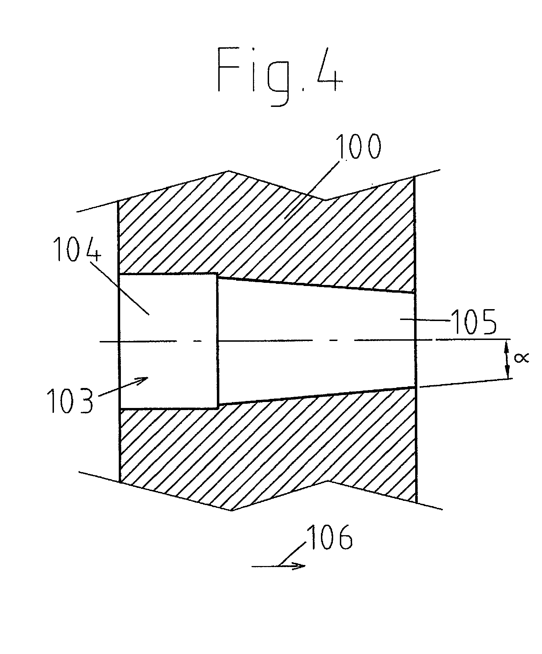

Fig. 3 zeigt eine vereinfachte Kalibrierblende 100 mit einer Durchtrittsöffnung 101 für das hier nicht dargestellte zu kalibrierende Profil. Insgesamt sind vier Kalibriereinsätze 102 in die Blende 100 eingesetzt. Fig. 4 zeigt ein Detail der Kalibrierblende von Fig. 3 im Schnitt. Die Nut 103, die zur Aufnahme des Halteabschnitts 1 des Kalibriereinsatzes 102 vorgesehen ist, besteht aus einem zylindrischen stromaufwärtigen Teil 104 und einem konisch ausgebildeten stromabwärtigen Teil 105. Die Extrusionsrichtung ist durch den Pfeil 106 dargestellt. Der Winkel α entspricht dem der konischen Bereiche 3, 4 des Halteabschnitts 1 und ist auch hier übertrieben dargestellt.

## Patentansprüche

1. Kalibrierblende (100) für ein Kalibrierwerkzeug zur Herstellung von Kunststoffprofilen, mit mindestens einem Kalibriereinsatz (102), der einen Halteabschnitt (1) und einen Formgebungsabschnitt (2) aufweist, wobei der Halteabschnitt (1) in einer Nut (103) der Kalibrierblende (100) aufgenommen ist und formschlüssig gehalten ist, **dadurch gekennzeichnet, dass** der Halteabschnitt (1) des Kalibriereinsatzes (102) aus zwei koaxial angeordneten konischen Bereichen (3, 4) besteht, die im mittleren Bereich ihre größte Querschnittserstreckung aufweisen.

2. Kalibrierblende (100) nach Anspruch 1, **dadurch gekennzeichnet, dass** die Nut (103) der Kalibrierblende (100) aus einem stromaufwärtigen Abschnitt (104) und einem stromabwärtigen Abschnitt (105) besteht, der konisch entsprechend einem konischen Bereich des Kalibriereinsatzes (102) ausgebildet ist, um diesen formschlüssig aufzunehmen.

3. Kalibrierblende (100) nach Anspruch 2, **dadurch gekennzeichnet, dass** der stromaufwärtige Abschnitt (104) der Kalibrierblende (100) im Wesentlichen zylindrisch ausgebildet ist.

4. Kalibriereinsatz (102) für eine Kalibrierblende (100) für ein Kalibrierwerkzeug zur Herstellung von Kunststoffprofilen, wobei der Kalibriereinsatz (102) einen Halteabschnitt (1) und einen Formgebungsabschnitt (2) aufweist, wobei der Halteabschnitt (1) dazu vorgesehen ist, in einer Nut der Kalibrierblende (100) aufgenommen und formschlüssig gehalten zu werden, **dadurch gekennzeichnet, dass** der Halteabschnitt (1) des Kalibriereinsatzes (102) aus zwei koaxial angeordneten konischen Bereichen (3, 4) besteht, die im mittleren Bereich ihre größte Querschnittserstreckung aufweisen.

5. Kalibriereinsatz (102) nach Anspruch 4, **dadurch gekennzeichnet, dass** er um eine zur Längsachse (5) rechtwinkelig angeordnete Ebene symmetrisch ausgebildet ist.

6. Kalibriereinsatz (102) nach einem der Ansprüche 4 oder 5, **dadurch gekennzeichnet, dass** die konischen Bereiche (3, 4) zumindest abschnittsweise kegelstumpfförmig ausgebildet sind.

7. Kalibriereinsatz (102) nach einem der Ansprüche 4 bis 6, **dadurch gekennzeichnet, dass** zwischen dem Halteabschnitt (1) und dem Formgebungsabschnitt (2) ein Stabilisierungsabschnitt (7) vorgesehen ist, der Anlageflächen (8, 9) zur seitlichen Stabilisierung des Kalibriereinsatzes (102) aufweist.

8. Kalibriereinsatz (102) nach einem der Ansprüche 4 bis 7, **dadurch gekennzeichnet, dass** zwischen dem Halteabschnitt (1) und dem Formgebungsabschnitt (2) Freistellungen zur Aufnahme eines Erosionswerkzeugs bei der Herstellung vorgesehen sind.

9. Kalibriereinsatz (102) nach einem der Ansprüche 4 bis 8, **dadurch gekennzeichnet, dass** die konischen Abschnitte (3, 4) aus Erzeugenden zusammengesetzt sind, die einen Winkel α zwischen 1,5° und 8°, vorzugsweise zwischen 2° und 5° gegenüber der Längsachse (5) aufweisen.

10. Kalibriereinsatz (102) nach einem der Ansprüche 4 bis 9, **dadurch gekennzeichnet, dass** der Formgebungsabschnitt (2) seitlich gegenüber dem Halteabschnitt (1) versetzt angeordnet ist.

## Claims

1. A calibrating baffle plate (100) for a calibrating die for the production of plastic profiles, comprising at least one calibrating insert (102) which comprises a holding section (1) and a shaping section (2), wherein the holding section (1) is accommodated in a groove (103) of the calibrating baffle plate (100) and is held in an interlocking manner, **characterised in that** the holding section (1) of the calibrating insert (102) consists of two coaxially arranged conical areas (3, 4) which have their largest cross-sectional extension in the middle region.

2. A calibrating baffle plate (100) according to claim 1, **characterised in that** the groove (103) of the calibrating baffle plate (100) consists of an upstream section (104) and a downstream section (105) which is conically arranged according to a conical region of the calibrating insert (102) in order to accommodate said insert in an interlocking fashion.

3. A calibrating baffle plate (100) according to claim 2, **characterised in that** the upstream section (104) of the calibrating baffle plate (100) is substantially arranged in a cylindrical way.

4. A calibrating insert (102) for a calibrating baffle plate (100) for a calibrating die for the production of plastic profiles, wherein the calibrating insert (102) comprises a holding section (1) and a shaping section (2), wherein the holding section (1) is provided to be accommodated and held in an interlocking fashion in a groove of the calibrating baffle plate (100), **characterised in that** the holding section (1) of the calibrating insert (102) consists of two coaxially arranged conical areas (3, 4) which have their largest cross-sectional extension in the middle region.

5. A calibrating insert (102) according to claim 4, **characterised in that** it is symmetrically arranged about a plane disposed at a right angle to the longitudinal axis (5).

6. A calibrating insert (102) according to one of the claims 4 or 5, **characterised in that** the conical areas (3, 4) are arranged at least in sections in the manner of a truncated cone.

7. A calibrating insert (102) according to one of the claims 4 to 6, **characterised in that** a stabilization section (7) is provided between the holding section (1) and the shaping section (2), which stabilization section comprises contact surfaces (8, 9) for the lateral stabilization of the calibrating insert (102).

8. A calibrating insert (102) according to one of the claims 4 to 7, **characterised in that** exposed areas for accommodating an erosion tool in the production are provided between the holding section (1) and the shaping section (2).

9. A calibrating insert (102) according to one of the claims 4 to 8, **characterised in that** the conical sections (3, 4) are composed of generating lines which have an angle α of between 1.5° and 8°, preferably between 2° and 5°, in relation to the longitudinal axis (5).

10. A calibrating insert (102) according to one of the claims 4 to 9, **characterised in that** the shaping section (2) is arranged to be laterally offset in relation to the holding section (1).

## Revendications

1. Plaque de calibrage (100) destinée à un outil de calibrage permettant la fabrication de profilés en matériau synthétique comportant au moins un insert de calibrage (102) muni d'une partie de support (1) et d'une partie de conformation (2), la partie de support (1) étant logée dans une rainure (103) de la plaque de calibrage (100) et maintenue par une liaison par la forme,
**caractérisée en ce que**
la partie de support (1) de l'insert de calibrage (102) est constituée de deux zones coniques (3, 4) coaxiales dont la plus grande section est située dans la zone moyenne.

2. Plaque de calibrage (100) conforme à la revendication 1,
**caractérisée en ce que**
la rainure (103) de la plaque de calibrage (100) est constituée d'une partie amont (104) et d'une partie aval (105) conique correspondant à une zone conique de l'insert de calibrage (102) pour permettre de le recevoir par une liaison par la forme.

3. Plaque de calibrage (100) conforme à la revendication 2,
**caractérisée en ce que**
la partie amont (104) de la plaque de calibrage (100) est essentiellement cylindrique.

4. Insert de calibrage (102) pour une plaque de calibrage (100) destiné à un outil de calibrage permettant la fabrication de profilés en matériau synthétique, cet insert de calibrage (102) comportant une partie de support (1) et une partie de conformation (2), la partie de support (1) étant destinée à être logée dans une rainure de la plaque de calibrage (100) et à y être maintenue par une liaison par la forme,
**caractérisée en ce que**
la partie de support (1) de l'insert de calibrage (102) est constituée de deux zones coniques coaxiales (3, 4) qui présentent leur plus grande section dans la zone médiane.

5. Insert de calibrage (102) conforme à la revendication 4,
**caractérisée en ce qu'**
il est symétrique par rapport à un plan perpendiculaire à l'axe longitudinal (5).

6. Insert de calibrage (102) conforme à l'une des revendications 4 ou 5,
**caractérisée en ce que**
les zones coniques (3, 4) sont réalisées en forme de troncs de cône au moins un par sections.

7. Insert de calibrage (102) conforme à l'une des revendications 4 à 6,
**caractérisée en ce qu'**
entre la partie de support (1) et la partie de conformation (2) il est prévu une partie de stabilisation (7) qui comporte des surfaces de positionnement (8, 9) permettant la stabilisation latérale de l'insert de calibrage (102).

8. Insert de calibrage (102) conforme à l'une des revendications 4 à 7,
**caractérisée en ce qu'**
entre la partie de support (1) et la partie de conformation (2) sont prévues des positions libres pour la réception d'un outil d'abrasion lors de la fabrication.

9. Insert de calibrage (102) conforme à l'une des revendications 4 à 8,
**caractérisée en ce que**
les parties coniques (3, 4) ont des génératrices qui définissent un angle α compris entre 1.5° et 8° de préférence entre 2° et 5° avec l'axe longitudinal (5).

10. Insert de calibrage (102) conforme à l'une des revendications 4 à 9,
**caractérisée en ce que**
la partie de conformation (2) est décalée latéralement par rapport à la partie de support (1).
